# EUROPEAN PATENT APPLICATION

(11) **EP 1 637 228 A1**
(43) Date of publication of application: **22.03.2006**
(21) Application number: 04021997.4
(22) Date of filing: 16.09.2004
(51) Int. Cl.: B01L 7/00, C12Q 1/68

(54) **Method an apparatus for performing rapid thermo cycling as well as a micro fabricated system**

(71) Applicant: Roche Diagnostics GmbH, 68305 Mannheim (DE); F. HOFFMANN-LA ROCHE AG, 4070 Basel (CH)
(72) Inventor: Kopp, Martin, 6332 Hagendorn (CH); Sarofim, Emad, 6332 Hagendorn (CH)
(74) Representative: Troesch Scheidegger Werner AG

(57) **Abstract**

A method to adjust a temperature of a fluid (8) is disclosed, the method comprising the steps of providing a heat sink (4) taking effect on the fluid (8), heating the fluid (8) by Joule heating, and adjusting the heat provided by Joule heating in order to reach a desired temperature of the fluid (8). Furthermore, an apparatus to carry out the method is also disclosed. Therewith, a very efficient temperature change of the fluid can very fast be obtained since the temperature of the surrounding is not substantially changed by heat diffusion. While a temperature increase is carried out by Joule heating, a temperature decrease is carried out by simply deactivating Joule heating. As soon as Joule heating is deactivated, the heat is extracted from the fluid by the heat sink, thereby initiating a high speed temperature change towards lower temperatures.

## Description

The present invention is directed to a method to adjust a temperature of a fluid, an apparatus according to the precharacterizing part of claim 8 as well as to a micro fabricated system.

PCR (Polymerase Chain Reaction) and other cyclic polymerase-mediated reactions are standard tools of modern biological research, and are also commonly used for numerous applications, such as medical diagnostic procedures and forensic applications.

Recently, attempts have been made to shorten the time required for each cycle of a PCR. Such methods often reduce the time by, for example, performing the PCR in devices that allow rapid temperature changes, thereby eliminating much of the time previously required for PCR to "ramp" the temperature of the solution from one stage of the PCR to the next. In addition, it has been recognized that the use of apparatus that allow greater heat transfer, e.g. thin-walled tubes, turbulent air-based machines, also allow the use of shorter cycle times.

It is well known that thermo cycling PCR and other thermo cyclic applications can be conducted in micro fluidic systems using joule heating. In brief, energy is provided to heat fluids by application of electric current to fluids in micro channels. A power source is used to pass electrical current through the fluid in a channel for heating purposes as well as for material transport (WO 00/60 108).

Furthermore, a micro fabricated reactor is described in US-5 639 423. This known teaching comprises a reactor with electrodes that are not in contact with the fluid to be heated.

EP-0 963 250 B1 discloses an apparatus for performing the polymerase chain reaction in a plurality of liquid reaction mixtures. Thereby, a Peltier electro thermal device is used to adjust a desired temperature of the liquid. The Peltier electro thermal device is, on one side, in close contact with the liquid and, on the other side, in close contact with a heat sink. In order to adjust the temperature of the liquid, heat must be transferred from or to the Peltier electro thermal device.

The speed of the known PCR technology is limited by the temperature ramping speed of the surrounding vessel or instrument, respectively, and the speed of the heat transfer, given by the heat conductivity of the used material and of the fluid, from the heated wall of the vessel to the center of the fluid.

It is an objective of the present invention to provide a method that allows an increased speed for the heat transfer compared to known methods.

This objective is achieved by the features given in claim 1. Further embodiments of the present invention, an apparatus as well as a micro fabricated system are given in further claims.

The present invention has at least the following advantage: By providing a heat sink (4) taking effect on the fluid (8), by heating the fluid (8) by Joule heating, and, finally, by adjusting the heat provided by Joule heating in order to reach a desired temperature of the fluid (8), a very efficient temperature change of the fluid can very fast be obtained since the temperature of the surrounding is not substantially changed by heat diffusion. While a temperature increase is carried out by Joule heating, a temperature decrease is carried out by simply deactivating Joule heating. As soon as Joule heating is deactivated, the heat is extracted from the fluid by the heat sink, thereby initiating a high speed temperature change towards lower temperatures.

The present invention will be further explained in the following by referring to exemplified embodiments shown in drawings. It is shown in:
- Fig. 1,: schematically, an apparatus according to the present invention comprising a vessel, a heat sink and electrodes,
- Fig. 2,: schematically, a specific embodiment of an electrode used in the apparatus according to the present invention,
- Fig. 3,: schematically, a partial view of embedded electrodes in the bottom of the vessel,
- Fig. 4,: schematically, a partial view of electrodes mounted at the side of the vessel in a yet another embodiment of the present invention, and
- Fig. 5,: schematically, a further embodiment of an apparatus according to the present invention comprising a vessel with a transparent cover.

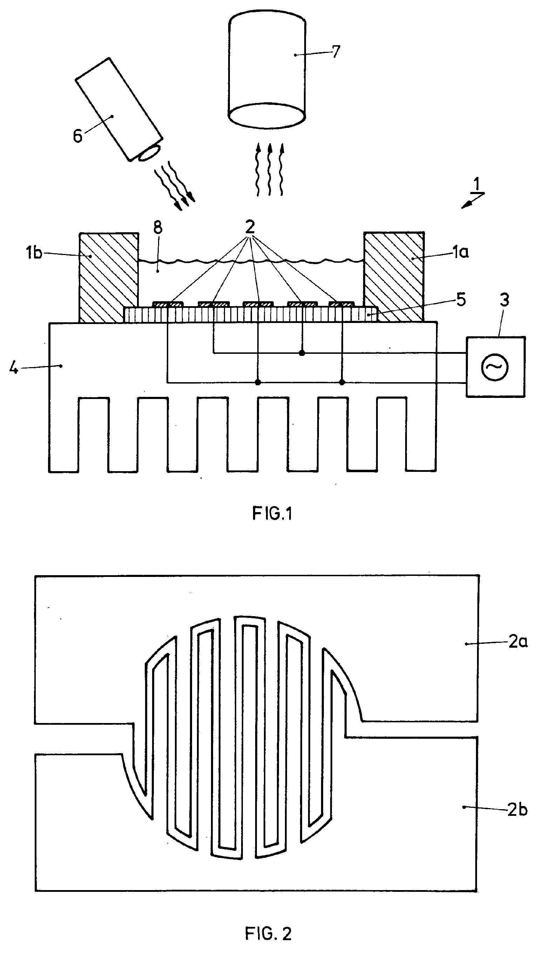

In Fig. 1, an apparatus according to the present invention is depicted in a cross-sectional view, the apparatus comprising a vessel 1 containing a fluid 8, electrodes 2, a supply unit 3, a heat sink 4 and instruments, which can be, for example, a fluorescence excitation unit 6 and a fluorescence detection unit 7.

The vessel 1 is formed by sidewalls 1a, 1b, of which only two are visible in Fig. 1, and a bottom layer, which consists of a material with a higher thermal conductivity than the material of the sidewalls 1a, 1b. The bottom layer is therefore also referred to as heat transfer layer 5. Furthermore, the vessel 1 has, for example, a flat shape to hold a volume of 50µl, for example. The term flat shape means that the height of the vessel 1 is smaller than the width of the vessel 1. In one embodiment of the present invention, the ratio of height and width is larger than one over five. The small fluid volume guarantees rapid heat diffusion. In another embodiment of the present invention, the vessel 1 is a cylinder, again with a heat transfer layer as bottom layer. In yet another embodiment, the vessel is disposable.

As it is depicted in Fig. 1, the vessel 1 has an opening, also referred to as window, through which access is provided for the above-mentioned instruments 6 and 7 or any other device, such as a pipette, for example, to introduce the fluid 8 to be analyzed or to introduce an additional chemical substance into the fluid 8.

In a further embodiment, the opening of the vessel is covered by a transparent cover made of a transparent material, such as polycarbonate, polypropylene or PMMA (plexiglass or acrylic plastic) having a thickness of 1 mm, for example. In general, a transparent polymer is used for the cover. In such an embodiment, the fluid cannot be introduced through the opening at the top of the vessel but must be introduced in another manner, for example through one or several fluid channels leading into the vessel 1 (not shown in Fig. 1). In such an embodiment at least one input and preferably one output channel are provided.

The heat sink 4 is arranged in close thermal contact to the heat transfer layer 5 and possibly to the sidewalls of the vessel 1, as it is the case for the embodiment depicted in Fig. 1. The heat sink 4 is designed to have a large thermal capacity compared to the one of the other components, in particular the fluid 8, the electrodes 2 and the vessel 1. For example, the thermal capacity of the heat sink 4 is ten times larger than one of the other components. Furthermore, a large surface area is provided for the heat sink 4 in order to establish equal temperature with its surrounding very quickly. In order to achieve a large surface area, the heat sink 4 is built in a conventional manner, as it is depicted in Fig. 1. In one embodiment, the above-described heat sink 4 is a passive cooling element.

In a further embodiment of the present invention, the heat sink 4 is an active cooling element, which is able to adjust the temperature independently of the ambient temperature. A possible active element is, for example, a Peltier Thermal Electrical Device (TED) that is well known in the state of the art (EP-0 963 250 B1).

The electrodes 2, which, when in operation, are connected to the supply unit 3, are in direct and close contact to the fluid 8 as well as to the heat transfer layer 5. Conveniently, the heat transfer layer 5 is an integral part of the vessel 1. Therewith, it is assured that heat transfer between the fluid 8, the heat transfer layer 5, the electrodes 2 and the heat sink 4 can take place very easily and very quickly.

It is though pointed out that it is not absolutely necessary that a heat transfer layer 5 is present. The invention can very well be realized without heat transfer layer 5. In such an embodiment of the present invention, the electrodes 2 are directly mounted on the heat sink 4, which must consist of an electrically non conducting material.

As has already been mentioned, the supply unit 3 is removeably connected to the electrodes by wires. To avoid redox reactions or accumulation of ions at the electrodes 2a, 2b an AC-(alternating current) source is proposed in the supply unit 3 providing an alternating field in the fluid 8, the frequency of the alternating field being greater than 15 kHz, for example.

Alternatively, the supply unit 3 can also be a DC-(direct current) source.

When using the present invention for thermo cyclic applications, such as PCR, for example, very short cycles can be obtained since the energy supply to the fluid 8 by the electrodes 2, in case of a temperature increase, and the energy transfer from the electrodes 2 or the fluid 8, respectively, and the heat sink 4 (through the heat transfer layer 5), in case of a temperature decrease, is very fast. In other words, while a so-called Joule heating is used to increase the temperature of the fluid 8, heat diffusion occurs to decrease the temperature of the fluid 8. In case a heat transfer layer 5 is used, as it is depicted in Fig. 1, the material for the heat transfer layer 5 must have a low electrical conductivity, while a high thermal conductivity must be guaranteed.

Fig. 2 shows a top view of electrodes 2a, 2b as they can be used, for example, in the embodiment depicted in Fig. 1. Basically, each of the two electrodes 2a, 2b is realized as a comb in such a manner that the two electrodes 2a, 2b can intermesh without touching one another. At the same time, a constant distance is provided between the electrodes. Both electrodes 2a, 2b are operationally connected to the supply unit 3.

The electrodes 2a, 2b can be formed by removing a track out of a gold coated polycarbonate film of a thickness of 200µm, for example.

In order to adjust the temperature in the vessel 1, a temperature measurement unit is provided (not shown in Figs. 1 to 4) to measure the temperature of the fluid 8. To fully control the temperature of the fluid 8, a closed loop is obtained by operationally connecting the output of the temperature measurement unit back to the supply unit 3, in which the output signals for the electrodes 2a, 2b is adjusted accordingly. For example, the temperature measurement unit comprises a ring electrode incorporated into the vessel 1. The ring electrode changes conductivity as a function of the momentary temperature, and is isolated from the fluid by a thin polymer-layer that is smaller than 50 µm, for example.

In a specific embodiment of the present invention, the ring electrode is incorporated into the transparent cover in such a manner that the optical path of the light coming from the excitation unit 6, for example, is not or only slightly disturbed. In one embodiment, the ring electrode is arranged at a constant distance from the sidewalls 1a, 1b of the vessel 1. The distance is in the range of 1 mm, for example. It is pointed out that the ring electrode to measure the temperature of the fluid 8 can either be arranged on the upper side of the cover or on the lower side of the cover. In the latter case, where the ring electrode is in close contact with the fluid 8, its temperature can be determined very fast, which allows a higher control over the actual temperature of the fluid 8.

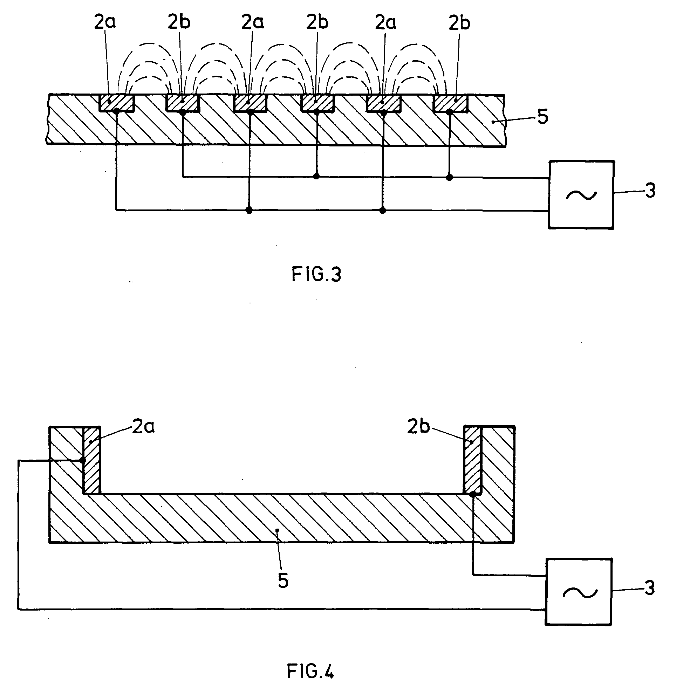

Fig. 3 schematically shows, in a partial view, a further embodiment of an inventive arrangement of electrodes 2a, 2b in the heat transfer layer 5. In contrast to the embodiment of Fig. 1, the electrodes 2a, 2b are now embedded into the heat transfer layer 5 in that the upper surface of the electrodes 2a, 2b is flush with the upper surface of the heat transfer layer 5. Additionally, the electric field lines are also depicted in Fig. 3 for illustration purposes.

Fig. 4 schematically shows, again in a partial view, a yet another embodiment of an arrangement of electrodes 2a, 2b according to the present invention. In contrast to the embodiments described along with Figs. 1 to 3, this embodiment has no electrodes in the bottom of the vessel 1 (Fig. 1) but the electrodes form at least a part of the sidewalls of the vessel receiving the fluid being analyzed. Preferably, the heat transfer layer 5 encompasses the electrodes 2a, 2b or they are incorporated into the heat transfer layer 5, respectively, being incorporated or forming the side walls of the vessel.

In general, the embodiment of Fig. 4 opens up numerous variations with electrodes in the side walls. For example, one such embodiment may have a similar structure of electrodes in the sidewalls of the vessel as is provided according to Fig. 3 in the bottom of the vessel. Accordingly, the electrodes are positioned circumferentially in such an embodiment.

As in Fig. 1, the heat sink 4 is also provided for the embodiment of Figs. 3 and 4 at the bottom of the vessel. Alternatively, as it is indicated by the heat transfer layer 5 in Fig. 4, the heat sink 4 may also encompass the vessel, i.e. the vessel may completely be embedded into the heat sink 4 with the exception of the window, which is either provided as upper opening of the vessel, or which is covered by a transparent cover as has already been described.

The heat transfer layer 5 preferably consists of a polymer film, for example, while the heat sink 4 is preferably made of a metal, e.g. aluminum, or of ceramic. The electrodes 2a, 2b as well as the ring electrode for temperature measurement, if present, are also made of a metal, e.g. aluminum, which might be coated by gold or platinum.

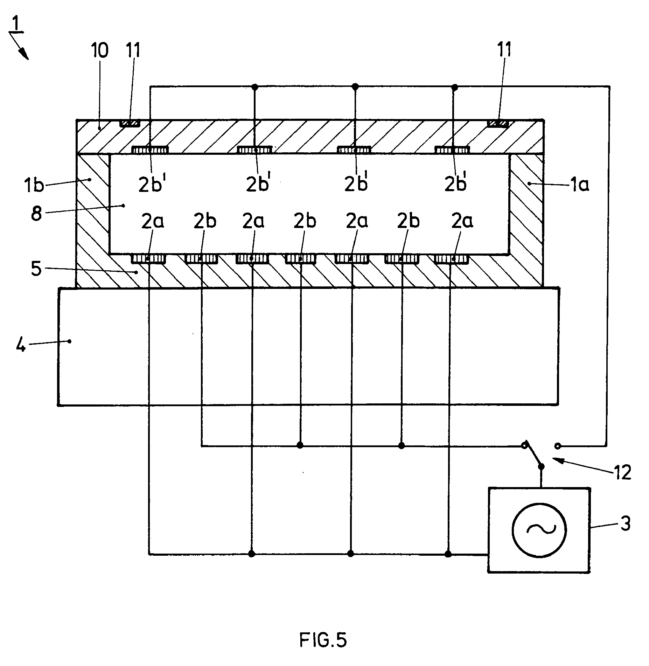

Fig. 5 schematically shows a further embodiment of an apparatus according to the present invention. In contrast to the embodiment shown in Fig. 1, the embodiment of Fig. 5 comprises a vessel 1 with a transparent cover 10. In addition, the vessel 1 is a single piece apart from the transparent cover 10. As has already been mentioned, the transparent cover 10 is made of a transparent material, such as polycarbonate, polypropylene or PMMA (plexiglass or acrylic plastic) having a thickness of 1 mm, for example. In general, a transparent polymer is used for the cover 10. The material for the lower part of the vessel 1 - i.e. the sidewalls 1a, 1b and the heat transfer layer 5 - does not have to be transparent. Although the same materials as for the transparent cover 10 can very well be used for the entire vessel 1, other non-transparent materials, such as ceramic, is also very suitable.

As in the embodiment of Fig. 1, the electrodes 2a, 2b are integrated into the heat transfer layer 5 forming the bottom of the vessel 1. The electrodes 2a, 2b can be of the same type as the one shown in Fig. 1. Alternatively, the comb-type electrodes of Fig. 2 can also be used. In addition to the electrode 2b incorporated into the heat transfer layer 5, a further electrode 2b' is provided in the transparent cover 10. The electrode 2b as well as the further electrode 2b' are also connectable to the supply unit 3 via a switch unit 12. The switch unit 12 allows to either connect the supply unit 3 to the electrode 2b or to the electrode 2b' in order that, on the one hand, an electric field is generated between the electrodes 2a, 2b in the fluid 8, or, on the other hand, an electric field is generated between the electrodes 2a, 2b' in the fluid 8.

While the electric field between the electrodes 2a, 2b is inhomogeneous in the fluid 8, the electric field between the electrodes 2a, 2b' is substantially homogeneous.

In connection with the switch unit 12, the electrodes 2a, 2b, 2b' allow an optimal temperature control of the fluid 8 in that the combination of the electrodes 2a, 2b' is used to reach a desired temperature of the fluid 8, and the combination of the electrodes 2a, 2b is used to hold the desired temperature of the fluid 8. Accordingly, the switch unit 12 is put into the corresponding state.

As has been mentioned in connection with the temperature control of the fluid 8, a ring electrode is used to measure or estimate the temperature of the fluid 8. Such a ring electrode is referred to by the reference sign 11 in Fig. 5. In this embodiment, the ring electrode 11 is incorporated into the transparent cover 10, preferably on its upper side.

It is expressly pointed out that the electrode 2b' can have any shape, e.g. a comb or a lattice. In order that the excitation unit 6 and the detection unit 7 (Fig. 1) are fully operational, the area of the window of the vessel 1 covered by the electrode 2b' and, if present, of the ring electrode 11 is between 10 and 70% of the full window area. Preferably, 50% of the window area is covered by the electrodes 2b', 11.

As has already been pointed out, the electrodes 2a, 2b respectively 2b' are provided to allow Joule heating. Joule heating is a very efficient heating by application of electric current to the fluid in the vessel. In general, electric current passing through the fluid in the vessel produces heat by dissipating energy through the electrical resistance of the fluid. Power dissipates as the current passes through the fluid and goes into the fluid as energy as a function of time to heat the fluid.

The apparatus of the present invention is in particular suitable to be implemented as a micro fabricated system. Micro fabricated technology allows the production of electrical, mechanical, electromechanical, optical, chemical and thermal devices including pumps, valves, heaters, mixers and detectors for micro liter to nano liter quantities of solids, liquids and gases. The integration of these devices into a single system allows for the batch production of micro scale reactor-based analytical instruments. Such integrated micro fabricated devices can be manufactured in batch quantities with high precision, yet low cost, thereby making recyclable and/or disposable single-use devices practical.

## Claims

1. A method to adjust a temperature of a fluid (8), the method comprising the steps of
- providing a heat sink (4) taking effect on the fluid (8),
- heating the fluid (8) by Joule heating,
- adjusting the heat provided by Joule heating in order to reach a desired temperature of the fluid (8).

2. The method of claim 1, further comprising the steps of
- measuring the temperature of the fluid (8),
- adjusting the heat provided by Joule heating in accordance to the measured fluid temperature.

3. The method of claim 1 or 2, wherein an AC-(alternating current) source is provided for Joule heating the fluid (8).

4. The method of one of the claims 1 to 3, further comprising the step of operating the heat sink steadily.

5. The method of one of the claims 1 to 4, further comprising the step of adjusting the heat sink to a preset temperature.

6. The method of one of the claims 1 to 5, further comprising the step of inhomogenously heating the fluid (8).

7. The method of one of the claims 2 to 5, further comprising the steps of
- homogenously heating the fluid (8) until a preset temperature of the fluid (8) is reached,
- inhomogenously heating the fluid (8) to hold the preset temperature.

8. An apparatus comprising a vessel (1) for receiving a fluid (8), a heating element for heating the fluid (8), and a supply unit (3) for supplying the heating element with energy, **characterized in that** the heating element comprises electrodes (2; 2a, 2b; 2b') in order to generate an electric current in the fluid (8), and that a heat sink (4) is provided, which takes effect on the fluid (8) in the vessel (1).

9. The apparatus of claim 8, **characterized in that** the heat sink comprises an active cooling element.

10. The apparatus of claim 8 or 9, **characterized in that** the vessel (1) is disposable.

11. The apparatus of one of the claims 8 to 10, **characterized in that** a heat transfer layer (5) is provided between the heat sink (4) and the fluid (8).

12. The apparatus of claim 11, **characterized in that** the electrodes (2; 2a, 2b) are mounted on the heat transfer layer (5) on the side of the fluid (8).

13. The apparatus of claim 11, **characterized in that** the electrodes (2; 2a, 2b) are embedded into the heat transfer layer (5) on the side of the fluid (8).

14. The apparatus of one of the claims 8 to 13, **characterized in that** the vessel (1) is covered by a transparent cover (10).

15. The apparatus of claim 14, **characterized in that** the transparent cover (10) comprises a further electrode (2b').

16. The apparatus of claim 15, **characterized in that** either the electrodes (2a, 2b) of the heat transfer layer (5), or one electrode of the heat transfer layer (5) and the further electrode (2b') are connected to the supply unit (3).

17. The apparatus of one of the claims 8 to 16, **characterized in that** the electrodes (2; 2a, 2b; 2b') are in direct contact with the fluid (8) to be heated.

18. The apparatus of one of the claims 8 to 17, **characterized in that** the vessel (1) has a flat shape.

19. The apparatus of one of the claims 8 to 18, **characterized in that** the electrodes (2; 2a, 2b) are forming at least a part of the side walls of the vessel (1).

20. The apparatus of one of the claims 8 to 18, **characterized in that** the electrodes (2; 2a, 2b) partially cover the bottom of the vessel (1).

21. The apparatus of claim 19, **characterized in that** each electrode (2a, 2b) has a comb-type structure intermeshing with the other electrode (2b, 2a).

22. The apparatus of one of the claims 8 to 21, **characterized in that** the supply unit (3) is an AC-(alternating current) source providing an alternating field in the fluid (8), the frequency of the alternating field being greater than 15 kHz.

23. The apparatus of one of the claims 8 to 22, **characterized in that** a temperature measurement unit is provided to measure the temperature of the fluid (8), the temperature measurement unit being operationally connected to the supply unit (3).

24. The apparatus of claim 23, **characterized in that** the temperature measurement unit comprises a ring electrode incorporated into the vessel (1), said ring electrode having an electrical conductivity that is dependent on a momentary temperature.

25. A micro fabricated system comprising an apparatus according to one of the claims 8 to 24.
